# FASCICULE DE BREVET EUROPEEN

(11) **EP 1 868 764 B1**
(45) Date de publication et mention de la délivrance du brevet: **11.05.2011**
(21) Numéro de dépôt: 06726281.6
(22) Date de dépôt: 28.03.2006
(51) Int. Cl.: B23K 20/06, B23K 20/227, H05B 6/10

(54) **PROCEDE POUR L'ASSEMBLAGE DE PIECES METALLIQUES PAR IMPACTAGE A L'AIDE D'UNE FORCE MAGNÉTIQUE UTILISANT DEUX BOBINES ÉLECTROMAGNÉTIQUES MOBILES L'UNE PAR RAPPORT A L'AUTRE**
VERFAHREN ZUR MONTAGE VON METALLTEILEN DURCH AUFSCHLAG MITTELS EINER MAGNETKRAFT UNTER VERWENDUNG ZWEIER BEZÜGLICH EINANDER BEWEGLICHER ELEKTROMAGNETISCHER SPULEN
METHOD FOR ASSEMBLING METAL PARTS BY IMPACTING WITH THE AID OF A MAGNETIC FORCE USING TWO ELECTROMAGNETIC COILS MOVABLE WITH RESPECT TO EACH OTHER

(30) Priorité: 31.03.2005 FR 0503165
(43) Date de publication de la demande: 26.12.2007
(73) Titulaire: Renault s.a.s., 92100 Boulogne Billancourt (FR)
(72) Inventeur: CRIQUI, Bernard, F-92150 SURESNES (FR)
(74) Mandataire: Religieux, Vincent
(86) Numéro de dépôt international: PCT/FR2006/050266
(87) Numéro de publication internationale: WO 2006/103367

(56) Documents cités:
- EP-A- 1 053 820
- GB-A- 2 084 806
- US-A- 4 238 658
- US-B1- 6 389 697
- PATENT ABSTRACTS OF JAPAN vol. 1997, no. 03, 31 mars 1997 (1997-03-31) -& JP 08 306475 A (TOSHIBA CORP), 22 novembre 1996 (1996-11-22)

## Description

La présente invention concerne, de façon générale, le domaine de l'assemblage de pièces métalliques par impactage de ces pièces à l'aide d'une force électromagnétique.

Plus particulièrement, l'invention concerne un procédé d'assemblage d'une pièce en matériau ferromagnétique avec une pièce en matériau métallique paramagnétique conformément au préambule de la revendication 1 (voir, par exemple, US 6 389 697).

Afin d'assembler des pièces métalliques entre elles, ont connaît des procédés consistant à placer ces pièces dans un fort champ électromagnétique de telle façon que l'une au moins des pièces subisse une forte accélération générée par le champs et se déplace rapidement en direction de l'autre pièce métallique. L'énergie cinétique acquise par la pièce en mouvement est absorbée lors du choc entre les deux pièces métalliques à assembler. Si l'énergie dissipée lors du choc est suffisante alors les structures cristallines des pièces métalliques se mélangent au moins partiellement créant ainsi un assemblage entre les pièces s'apparentant à une soudure.

C'est la raison pour laquelle de nombreux fabricants d'outils pour l'assemblage de pièces métalliques ont développé diverses solutions visant à augmenter la résistance de tels assemblages ainsi qu'à réduire le coût de réalisation de ces assemblages.

Un outil d'assemblage est par exemple décrit dans le document brevet WO97/00151. Des pièces sont disposées dans une bobine électromagnétique et lorsque cette bobine est alimentée les pièces ont tendance à se déformer mécaniquement créant ainsi une adhésion de ces pièces par mélange de parties superficielles de leurs structures cristallines. Pour être assemblées, les pièces doivent être positionnées dans la bobine puis maintenues en position dans la bobine. De fait, cette position est difficile à maintenir car la bobine gène l'accès aux pièces à assembler. Il est donc difficile d'automatiser ce procédé d'assemblage pour de la fabrication en grande série.

Dans ce contexte, la présente invention a pour but de proposer un procédé d'assemblage de telles pièces permettant une automatisation de l'assemblage et facilitant les opérations de positionnement des pièces avant assemblage.

A cette même fin, l'invention concerne un procédé d'assemblage

Grâce au procédé selon l'invention, on peut disposer les pièces à assembler entre les butées sans être gêné par ces butées puisque celles-ci peuvent être écartées l'une par rapport à l'autre. Puis en rapprochant les butées l'une de l'autre on facilite le positionnement relatif des pièces à assembler, ces butées permettant un pré positionnement des pièces.

De plus, lorsque l'on alimente la première bobine pour projeter violemment l'une au moins des pièces en direction de l'autre pièce, l'une au moins des butées limite le déplacement d'une des pièces qui est alors coincée entre cette butée et la pièce projetée formant ainsi une sorte de tenaille de compression d'une pièce contre l'autre.

Grâce au procédé de l'invention, l'amplitude maximale du mouvement de projection d'une pièce sur l'autre peut être fixée simplement en réglant l'écart entre les butées, cet écart déterminant l'espace entre les pièces. En déterminant l'écart entre les butées, on peut fixer simplement à l'avance l'énergie cinétique qui sera transmise aux pièces lors de l'alimentation de la première bobine. En d'autres termes l'énergie maximale nécessaire à l'assemblage des pièces peut être fixée simplement et de façon sensiblement répétitive en contrôlant l'écart entre les butées et la puissance électromagnétique transmise par la première bobine à la ou aux pièces à assembler.

Le fait de pouvoir fixer l'espace entre les pièces/l'amplitude de mouvement entre les pièces permet une automatisation de l'assemblage des pièces.

L'amplitude maximale de mouvement d'une pièce par rapport à l'autre est égale à la distance existant entre les butées après les avoir écartées, soustraite de la distance existant entre les butées lorsque celles-ci serrent les pièces l'une contre l'autre.

De ce fait l'amplitude maximale de mouvement peut être définie précisément.

Outre le fait de permettre la fixation de l'amplitude maximale de mouvement des pièces, l'une au moins des butées sert également à générer un force résistante pour empêcher le déplacement de la pièce qui est impactée par la pièce en mouvement. Pour cela, les butées sont en matériau extrêmement rigide et dur tel que de l'acier forgé, ce qui réduit la quantité d'énergie absorbée et dissipée par la butée lors de l'impact. Ainsi une grande partie de l'énergie cinétique est directement transmise à l'interface entre les pièces, sans être dissipée par la butée, permettant de diffuser le matériau d'une pièce vers l'autre pièce.

Grâce au fort niveau d'énergie mis en oeuvre lors du soudage par impulsion magnétique, l'assemblage peut être réalisé avec des pièces à l'état solide, à froid (température ambiante d'un atelier de carrosserie) dans un temps très court et sans apport d'un troisième matériau. Une énergie d'impact entre les pièces de 1 à 10 Kj/cm2 peut être suffisante pour réaliser l'assemblage entre un matériau paramagnétique qui est de l'aluminium et un matériau ferromagnétique qui est de l'acier.

On peut par exemple faire en sorte que la seconde partie comporte un moyen d'aimantation adapté pour attirer la pièce en matériau ferromagnétique vers la seconde butée lorsque cette pièce est disposée entre les première et seconde butées.

La pièce en matériau ferromagnétique étant attirée vers la seconde butée, celle-ci a tendance à rester au contact de la seconde butée et à suivre ses déplacements. Grâce à cette caractéristique, en déplaçant la seconde butée, on déplace également la pièce en matériau ferromagnétique ce qui facilite la localisation de la pièce ferromagnétique par rapport à l'outil. Le fait que la pièce en matériau ferromagnétique soit attirée en direction de la seconde butée et reste à son contact est un avantage au moment de l'impact entre les pièces car la seconde butée exerce alors une force résistante sur la seconde pièce permettant une utilisation optimale de l'énergie cinétique qui est majoritairement utilisée pour matérialiser l'assemblage.

On peut par exemple faire en sorte que le moyen d'aimantation soit une seconde bobine électromagnétique. Ainsi, après avoir rapproché les butées l'une de l'autre et avant d'alimenter la première bobine, on alimente cette seconde bobine qui constitue un moyen d'aimantation adapté pour attirer la pièce en matériau ferromagnétique (disposée entre les première et seconde butées) vers la seconde butée.

Idéalement, cette seconde bobine lorsque alimentée électriquement permet d'immobiliser la pièce en matériau ferromagnétique par rapport à la seconde butée. Ceci est un avantage pour l'automatisation de l'outil et du procédé de l'invention puisque l'aimantation de la pièce en matériau ferromagnétique est sélective et dépend uniquement de la mise sous tension ou non de la seconde bobine.

On peut également faire en sorte que l'outil comporte une première source d'alimentation électrique adaptée pour alimenter sélectivement en électricité la première bobine, et/ou qu'il comporte une seconde source d'alimentation électrique adaptée pour alimenter sélectivement en électricité la seconde bobine.

D'autres caractéristiques et avantages de l'invention ressortiront clairement de la description qui en est faite ci-après, à titre indicatif et nullement limitatif, en référence aux dessins annexés, dans lesquels:
la figure 1 représente l'outil non couvert par la présente invention avec des pièces à assembler en forme de plaques métalliques ;
les figures 2a, 2b, 2c, 2d représentent les quatre étapes de mise en oeuvre du procédé selon l'invention, ces étapes étant réalisées avec l'outil non couvert par la présente invention ;
la figure 3 représente des courbes 14 et 15 d'intensités électrique en fonction du temps, ces courbes 14, 15 correspondent respectivement aux intensités électriques aux bornes des première et seconde bobines.

Comme annoncé précédemment, l'outil l'assemblage 1, non couvert par la présente invention permet l'assemblage d'une pièce en matériau ferromagnétique 2 avec une pièce métallique en matériau paramagnétique 3. Dans les exemples exposés, la pièce en matériau ferromagnétique 2 est une plaque d'acier et la pièce métallique en matériau paramagnétique 3 est une plaque d'aluminium.

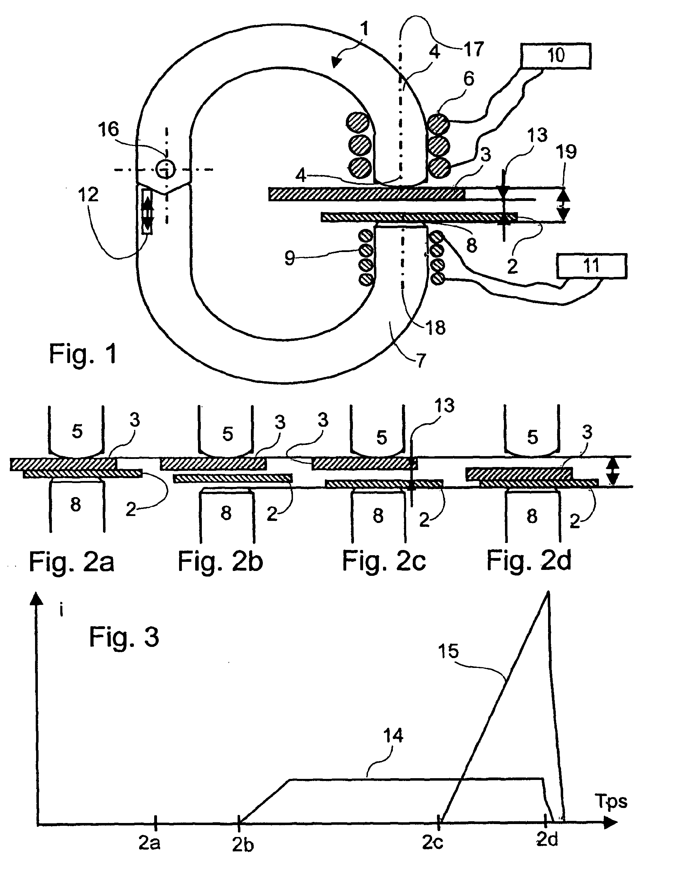

L'outil 1 non couvert par la présente invention est une sorte de pince composée de première et seconde parties 4, 7 assemblées entre elle de façon à permettre un déplacement relatif des première et seconde parties dans le plan des figures 1 et 2a à 2d. Ces première et seconde parties 3, 7 sont assemblées entre elles de manière à former une pince permettant un serrage des pièces à assembler 2, 3, entre les première et seconde butées 5, 8.

La première partie 4 est mobile par rapport à la seconde 7 dans le plan de la figure 1. Pour cela les première et seconde parties sont mobiles autour d'un axe 16 perpendiculaire au plan de la figure de façon à permettre l'écartement ou le rapprochement sélectif des butées 5, 8.

Une première butée 5 est formée à une extrémité de la première partie 4, en vis-à-vis d'une seconde butée formée à une extrémité de la seconde partie d'outil 7.

Une première bobine électromagnétique 6 est formée par enroulement d'un premier câble conducteur autour de la première butée, cette première butée 5 possède un axe de symétrie 17 servant également d'axe d'enroulement de la première bobine 6.

Une seconde bobine électromagnétique 9 est formée par enroulement d'un second câble conducteur autour de la seconde butée 8, cette seconde butée 8 possède un axe de symétrie propre 18 servant également d'axe d'enroulement de la seconde bobine 9.

Les axes de symétrie 17, 18 des première et seconde butées 5, 8 sont sensiblement coaxiaux entre eux de façon que les butées soit en vis-à-vis l'une par rapport à l'autre pour permettre le contact direct entre une pièce à assembler et une butée, sans toucher les bobines. Ces contacts entre les butées et les pièces sont ainsi sensiblement alignés selon les axes de symétries 17 et 18 et sont de fait dans l'axe des noyaux des bobines 6 et 9.

Un moyen d'immobilisation 12 est utilisé pour bloquer sélectivement le déplacement relatif de la seconde butée 8 par rapport à la première butée 5 ou pour autoriser sélectivement ce mouvement selon l'étape du procédé à laquelle on se trouve.

Ce moyen d'immobilisation 12 peut être une clavette ou une pièce d'attache de la première partie par rapport à la seconde partie, ce moyen peut être actionné par exemple à l'aide d'un vérin.

La plaque d'acier 2, constituant la pièce en matériau ferromagnétique est placée en vis-à-vis de la seconde butée 8, sensiblement perpendiculairement à l'axe de symétrie 18.

La plaque d'aluminium 3, constituant la pièce en matériau paramagnétique est placée en vis-à-vis de la première butée 5, sensiblement perpendiculairement à l'axe de symétrie 17.

Grâce à ses butées, l'outil, non couvert la présente invention, est particulièrement adapté pour réaliser des soudures par points de pièces en forme de plaques. La seconde butée a une forme légèrement plane pour permettre un appui plan de la plaque 2, alors que la première butée à une forme légèrement bombée pour au contraire concentrer le champ électromagnétique généré par la première bobine 6 dans une zone coaxiale aux axes 17 et 18.

Des première et seconde sources d'alimentation électrique 10 et 11 sont respectivement reliées aux première et seconde bobines 6 et 9.

La première source d'alimentation doit être extrêmement puissante (jusqu'à un million d'ampères) car c'est elle qui génère l'énergie électrique d'alimentation de la première bobine qui dans un temps très court de quelques micro-secondes va propulser la plaque d'aluminium contre la plaque d'acier. L'outil est dimensionné suivant les épaisseurs et raideurs des plaques ou tôles et selon la facilité à écarter ces plaques l'une de l'autre avant de les impacter en extrémité des noyaux des bobines (les extrémités des noyaux des bobines correspondent aux butées 5 et 8 de l'outil 1).

Les paramètres électro-magnéto-dynamiques sont ajustés pour obtenir un haut niveau d'énergie électrique transformée en énergie cinétique elle-même retransformée en énergie de liaison métallurgique formant la couche de diffusion liant les deux métaux. Ce soudage se réalise avec une densité d'énergie surfacique de quelques kilojoules par mm2.

Les figures 2a, 2b, 2c et 2d représentent les différentes étapes de l'utilisation de l'outil de la Figure 1 dans un procédé suivant l'invention permettant de réaliser l'assemblage des deux plaques/tôles 2, 3 de la figure 1.

Les deux pièces sont disposées entre les butées de façon que la pièce d'aluminium 3 soit en vis-à-vis de la première butée 5 et du noyau de la première bobine 6 et de façon que la pièce en acier 2 soit en vis-à-vis de la seconde butée 8 et par conséquent du noyau de la seconde bobine 9.

Dans un premier temps représenté à la figure 2a, on rapproche les butées l'une de l'autre pour serrer les plaques l'une contre l'autre entre les butées et réduire l'espace entre les plaque à zéro. On mesure alors l'écartement 19 entre les butées 5, 8, qui correspond sensiblement à l'épaisseur cumulée des deux plaques. Cette mesure peut être réalisée par un capteur de position relative des première et seconde parties et on mémorise cette valeur d'écartement 19.

Dans un second temps représenté à la figure 2b, on écarte la seconde butée de façon à créer un espace déterminé 13 entre les pièces/plaques 2, 3.

Pour cela, on augmente la distance d'écartement des butées (écartement préalablement mesuré et mémorisé) de la valeur de l'espace 13 à créer entre plaques 2, 3.

En alimentant la seconde bobine 11 soit en même temps que l'on écarte la seconde butée 8 de la première, soit après avoir écarté la seconde butée 8, la pièce en acier 2 est attirée contre la seconde butée 8 et écartée de la pièce en aluminium 2.

La pièces en acier 2 est représentée plaquée contre la seconde butée plane à la figure 2c.

L'alimentation électrique de la seconde bobine 9 qui permet de plaquer l'acier 2 contre la seconde butée 8 débute peu avant l'étape de la figure 2c, comme cela est visible sur la courbe d'intensité 14 de la figure 3.

Une fois l'écart 13 entre les plaques métalliques 2 et 3 fixé (cet écart est typiquement de 1 à 2 millimètres), on alimente électriquement la première bobine 6 à l'aide de la première alimentation électrique 10, comme le montre la courbe d'intensité 15 de la figure 3. L'intensité 15 augmente très rapidement en quelques micro-secondes. La plaque d'aluminium 2 est alors chassée vers la seconde butée 2 et acquiert une importante énergie cinétique en parcourant l'espace 13 interplaques. Les plaques se percutent et l'énergie cinétique acquise par la pièce d'aluminium 3 provoque la création d'une liaison métallurgique entre les pièces 2, 3.

Après l'impact, l'alimentation de la seconde bobine 9 puis celle de la première bobine 6 sont coupées, ces coupures interviennent après le point 2d de la figure 3 (cf courbes 14 et 15).

Selon un mode de réalisation particulier les première et seconde parties de l'outil sont asservies en position de façon à permettre des opérations automatisées de rapprochement et d'écartement des butées. De même les alimentation sont asservies de façon que l'ensemble des étapes de commande de l'outil puissent être automatisées. Selon un mode de réalisation les bobines peuvent être éloignées de l'extrémité des butées de façon à favoriser l'accessibilité aux butées.

## Revendications

1. Procédé l'assemblage, comprenant l'étape suivante :
- on positionne une pièce en matériau ferromagnétique (2) et une pièce en matériau métallique paramagnétique (3) entre des première et seconde butées (5, 8) ; **caractérisé en ce que** le procédé comprend les étapes suivantes :
- puis on rapproche les première et seconde butées (5, 8) de manière que la pièce en matériau paramagnétique (3) soit en contact avec la première butée (5) et avec la pièce en matériau ferromagnétique (2), sans toucher la seconde butée (8) et que la pièce en matériau ferromagnétique (2) soit en contact avec la seconde butée (8) et avec la pièce en matériau paramagnétique (3), sans toucher la première butée (5) ;
- puis on éloigne les première et seconde butées (5, 8) l'une de l'autre et on crée un espace déterminé (13) entre les pièces (2, 3), la pièce en matériau ferromagnétique (2) étant en contact contre la seconde butée (8) et la pièce en matériau paramagnétique (3) étant en contact contre la première butée (5) ;
- puis on alimente une première bobine (6) de façon à projeter et impacter les pièces (2, 3) l'une contre l'autre, l'énergie cinétique acquise par l'une au moins des pièces (3) devant être suffisante pour que les pièces (2, 3) restent assemblées entre elles après l'impact.

2. Procédé selon la revendication 1, **caractérisé en ce que** le matériau paramagnétique (3) est de l'aluminium et **en ce que** le matériau ferromagnétique (2) est de l'acier.

3. Procédé selon l'une quelconque des revendications 1 ou 2, **caractérisé en ce qu'**après avoir rapproché les butées (5, 8) l'une de l'autre et avant d'alimenter la première bobine (6), on alimente une seconde bobine (9) constituant un moyen d'aimantation (9) adapté pour attirer la pièce en matériau ferromagnétique (2) vers la seconde butée (8) lorsque cette pièce (2) est disposée entre les première et seconde butées (5, 8).

## Claims

1. Assembly method comprising the following step:
- a part (2) made of ferromagnetic material and a part (3) made of paramagnetic metal material is placed between first and second abutments (5, 8); **characterized in that** the method comprises the following steps:
- the first and second abutments (5, 8) are then brought closer together so that the part (3) made of paramagnetic material is in contact with the first abutment (5) and with the part (2) made of ferromagnetic material, without touching the second abutment (8) and so that the part (2) made of ferromagnetic material is in contact with the second abutment (8) and with the part (3) made of paramagnetic material, without touching the first abutment (5);
- then, the first and second abutments (5, 8) are moved further from one another and a determined space (13) is created between the parts (2, 3), the part (2) made of ferromagnetic material being in contact against the second abutment (8) and the part (3) made of paramagnetic material being in contact against the first abutment (5);
- then a first coil (6) is supplied so as to throw and impact the parts (2, 3) against one another, the kinetic energy acquired by at least one of the parts (3) having to be sufficient for the parts (2, 3) to remain assembled together after the impact.

2. Method according to Claim 1, **characterized in that** the paramagnetic material (3) is aluminum and **in that** the ferromagnetic material (2) is steel.

3. Method according to either one of Claims 1 and 2, **characterized in that**, after having brought the abutments (5, 8) closer to one another and before supplying the first coil (6), a second coil (9) is supplied forming a magnetization means (9) suitable for attracting the part (2) made of ferromagnetic material toward the second abutment (8) when this part (2) is placed between the first and second abutments (5, 8).

## Patentansprüche

1. Zusammenbauverfahren, das den folgenden Schritt enthält:
- ein Bauteil aus ferromagnetischem Material (2) und ein Bauteil aus paramagnetischem metallischem Material (3) werden zwischen ersten und zweiten Anschlägen (5, 8) positioniert;
**dadurch gekennzeichnet, dass** das Verfahren die folgenden Schritte enthält:
- dann werden der erste und der zweite Anschlag (5, 8) einander so angenähert, dass das Bauteil aus paramagnetischem Material (3) mit dem ersten Anschlag (5) und mit dem Bauteil aus ferromagnetischem Material (2) in Kontakt ist, ohne dass der zweite Anschlag (8) berührt wird, und dass das Bauteil aus ferromagnetischem Material (2) mit dem zweiten Anschlag (8) und mit dem Bauteil aus paramagnetischem Material (3) in Kontakt ist, ohne dass der erste Anschlag (5) berührt wird,
- dann werden der erste und der zweite Anschlag (5, 8) voneinander entfernt und ein bestimmter Zwischenraum (13) wird zwischen den Bauteilen (2, 3) erzeugt, wobei das Bauteil aus ferromagnetischem Material (2) gegen den zweiten Anschlag (8) und das Bauteil aus paramagnetischem Material (3) gegen den ersten Anschlag (5) in Kontakt ist;
- dann wird eine erste Spule (6) gespeist, um die Bauteile (2, 3) gegeneinander zu schleudern und aufprallen zu lassen, wobei die von mindestens einem der Bauteile (3) erworbene kinetische Energie ausreichend sein muss, damit die Bauteile (2, 3) nach dem Aufprall zusammengebaut bleiben.

2. Verfahren nach Anspruch 1, **dadurch gekennzeichnet, dass** das paramagnetische Material (3) Aluminium und das ferromagnetische Material (2) Stahl ist.

3. Verfahren nach einem der Ansprüche 1 oder 2, **dadurch gekennzeichnet, dass** nach der gegenseitigen Annäherung der Anschläge (5, 8) und vor dem Speisen der ersten Spule (6) eine zweite Spule (9) gespeist wird, die eine Magnetisierungseinrichtung (9) bildet, die geeignet ist, um das Bauteil aus ferromagnetischem Material (2) zum zweiten Anschlag (8) zu ziehen, wenn dieses Bauteil (2) zwischen dem ersten und dem zweiten Anschlag (5, 8) angeordnet ist.
